# EUROPÄISCHE PATENTSCHRIFT

(11) **EP 1 559 603 B1**
(45) Veröffentlichungstag und Bekanntmachung des Hinweises auf die Patenterteilung: **03.01.2007**
(21) Anmeldenummer: 05001075.0
(22) Anmeldetag: 20.01.2005
(51) Int. Cl.: B60K 6/04, F16H 3/12

(54) **Verfahren zum Hochschalten eines Parallelschaltgetriebes**
Method for upshifting a gearbox with two input shafts
Procédé de passage de vitesse supérieure dans une boîte de vitesses à deux arbres d'entrée

(30) Priorität: 27.01.2004 DE 102004003892
(43) Veröffentlichungstag der Anmeldung: 03.08.2005
(73) Patentinhaber: LuK Lamellen und Kupplungsbau Beteiligungs KG, 77813 Bühl (DE)
(72) Erfinder: Reitz, Dierk, 76530 Baden-Baden (DE); Pels, Thomas, 46359 Heiden (DE); Vestgard, Bard, 3400 Lier (NO)

(56) Entgegenhaltungen:
- EP-A- 1 270 301
- DE-A- 10 133 695
- DE-A- 19 945 473
- DE-A- 19 950 679

## Beschreibung

Die Erfindung betrifft ein Verfahren zum Hochschalten eines Parallelschaltgetriebes mit zwei Eingangswellen, die über je eine Kupplung mit der Antriebswelle eines Antriebsmotors kuppelbar sind, und einer Ausgangswelle, die über unterschiedliche Gangradsätze in drehfesten Eingriff mit den Eingangswellen bringbar ist, und wenigstens einer, mit einer der Eingangswellen drehfest verbindbaren Elektromaschine zur Abgabe eines das Antriebsmoment des Antriebesmotors unterstützenden Boost-Moments.

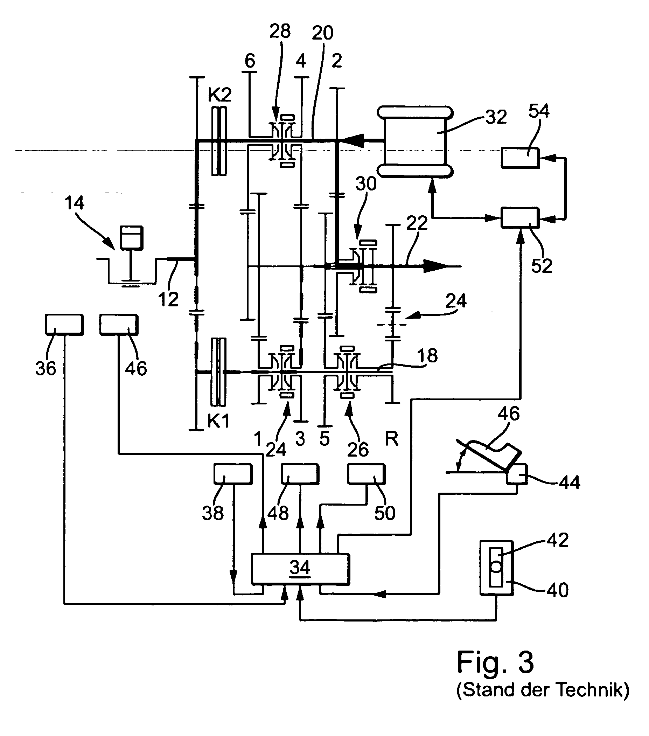

Fig. 3 zeigt eine Prinzipdarstellung eines Parallelschaltgetriebes mit zugehöriger Steuereinrichtung, wie es in modernen Kraftfahrzeugen eingesetzt wird und in der DE 10 133 695 A offenbart ist.

Eine Antriebswelle 12, beispielsweise die Kurbelwelle eines Antriebsmotors 14, wie einer Brennkraftmaschine, ist über ein Antriebszahnrad 16 in drehfestem Eingriff mit der Eingangsseite einer ersten Kupplung K1 und einer zweiten Kupplung K2. Die Ausgangsseite der Kupplung K1 ist drehfest mit einer ersten Eingangswelle 18 verbunden. Die Ausgangsseite der zweiten Kupplung K2 ist drehfest mit einer zweiten Eingangswelle 20 verbunden. Auf der Eingangswelle 18 sind Gangräder 1, 3, 5 und R gelagert; auf der Eingangswelle 20 sind Gangräder 4, 6 gelagert. Weiter ist mit der Eingangswelle 20 ein Gangrad 2 drehfest verbunden. Die Gangräder 1, 3, 6 und 4 kämmen mit drehfest mit einer Ausgangswelle 22 verbundenen Zahnrädern. Die Gangräder 5 und 2 kämmen mit drehbar auf der Ausgangswelle 22 gelagerten Zahnrädern und das Gangrad R ist über ein Zwischenrad 24 im Dreheingriff mit einem drehfest mit der Ausgangswelle 22 verbundenen Zahnrad. Mit Hilfe von Kopplungsgliedern 24, 26, 28 und 30 sind jeweilige Gangräder bzw. Zahnräder mit der zugehörigen Wellen synchronisierbar und drehfest koppelbar, so dass zwischen der Antriebswelle 12 und der Ausgangswelle 22 je nach geschlossener Kupplung K1 oder K2 verschiedene Gänge schaltbar sind. Die an den einzelnen Gangrädern stehenden Ziffern bzw. der Buchstabe R bezeichnen den jeweiligen Gang, der bei drehfester Kopplung der jeweiligen Eingangswelle mit der Ausgangswelle und geschlossener zugehöriger Kupplung geschaltet ist. Beispielsweise ist bei geschlossener Kupplung K1 und mittels des Kopplungsgliedes 24 drehfest mit der Eingangswelle 18 gekoppeltem Gangrand 1 der erste Gang geschaltet. Es versteht sich, dass die Kupplung K2 dann offen ist.

Mit der Eingangswelle 20 ist drehfest oder über eine zusätzliche, nicht dargestellte Kupplung, der Rotor einer Elektromaschine 32 verbunden, die beispielsweise als ein Starter/Generator betreibbar ist.

Zur Steuerung des geschilderten Getriebes dient eine elektronische Steuereinrichtung 34, deren Eingänge mit Sensoren 36 zur Erfassung von Betriebszuständen des Antriebsmotors 14, Sensoren 38 zur Erfassung von Betriebszuständen des Parallelschaltgetriebes, einem Sensor 40 zum Erfassen der Stellung eines Wählhebels 40 und einem Sensor 44 zur Erfassung der Stellung eines Fahrpedals 46 verbunden sind.

Ausgänge der elektronischen Steuereinrichtung 34, die einen Mikroprozessor mit zugehörigen Programm- und Datenspeichern enthält, sind mit einem Aktor 46 zum Betätigen eines Leitungsstellgliedes des Antriebsmotors 14, Aktoren 48 zum Betätigen der Kupplungen K1 und K2, Aktoren 50 zum Betätigen der Kopplungsglieder 24, 26, 28 und 30 sowie einer Steuereinheit 52 zum Steuern des Energieflusses zwischen der Elektromaschine 32 und einem elektrischen Energiespeicher 54 verbunden.

Aufbau und Funktion der geschilderten Anordnung sind an sich bekannt und werden daher nicht im Einzelnen erläutert.

Zum Anlassen des als Verbrennungskraftmaschine ausgebildeten Antriebsmotors 14 ist beispielsweise die Kupplung K1 offen, die Kupplung K2 geschlossen und besteht keine drehfeste Verbindung zwischen der Eingangswelle 20 und der Ausgangswelle 22, so dass der Antriebsmotor 14 mit Hilfe der Elektromaschine 32 angelassen werden kann. Sobald der Antriebsmotor 14 läuft, wird der erste Gang mit Hilfe des Kopplungsgliedes 24 eingelegt, so dass durch Schließen der Kupplung K1 angefahren werden kann. Der erste Gang kann aus Dynamikgründen auch bereits vor dem Start des Antriebsmotors 14 eingelegt werden. Die Kupplung K1 kann optional vor oder während des Starts des Antriebsmotors 14 bereits soweit geschlossen werden, dass ein Kriech- oder Anfahrmoment auf das Getriebe übertragen wird. Das von der Elektromaschine 32 abgegebene Moment wird dann auf Null gesetzt, so dass der zweite Gang mit Hilfe des Kopplungsgliedes 30 eingelegt werden kann und durch Öffnung der Kupplung K1 und gleichzeitiges Schließen der Kupplung K2 vom ersten in den zweiten Gang geschaltet werden kann. Soll das Fahrzeug abgebremst werden, so kann die kinetische Energie des Fahrzeuges von der Ausgangswelle 22 über jeweils zweckentsprechende Wege auf die Eingangswelle 20 und damit auf die Elektromaschine 32 übertragen werden, die dann als Generator läuft und den Energiespeicher 54 lädt.

Die Elektromaschine 32 kann nicht nur zum Anlassen des Antriebsmotors 14 und als Generator zum Rückgewinnen von Bremsenergie verwendet werden, sondern kann auch zusätzlich dazu verwendet werden, das vom Antriebsmotor 14 erzeugte Drehmoment zu unterstützen. Bei geschlossener Kupplung K2 (geschaltetem Gang 2, 4 oder 6) wird das zusätzliche Antriebsmoment der Elektromaschine unmittelbar in die Drehmoment übertragende Eingangswelle 20 eingeleitet (der Drehmomentübertragungsweg ist als durchgehenden dicker Strich eingezeichnet).

Wenn die Gänge 1, 3 oder 5 geschaltet sind, d.h. das Antriebsmoment des Antriebsmotors 14 über die Eingangswelle 18 auf die Ausgangswelle 22 übertragen wird (gestrichelter Pfad), kann bei offener Kupplung K2 einer der Gänge 2, 4 oder 6 eingelegt sein und das Boost-Moment der Elektromaschine 32 über den eingelegten Gang auf die Ausgangswelle 22 übertragen werden.

Bei einem Parallelschaltgetriebe wird vor der eigentlichen Gangschaltung bzw. dem Gangwechsel, der durch sich überschneidende gegensinnige Betätigung der Kupplungen K1 und K2 erfolgt, auf der jeweils der offenen Kupplung zugeordneten Eingangswelle entsprechend einer vorgegebenen Strategie ein Gang vorgewählt bzw. eingerückt oder in Neutral geschaltet. Die Synchronisierung auf den neuen Gang erfolgt dabei, ohne dass der Fahrer dies spürt. Die Elektromaschine 32, die im dargestellten Beispiel drehfest mit der Eingangswelle 20 verbunden ist, muss im dargestellten Beispiel zur Synchronisierung bzw. zum Einlegen eines geraden Gangs bei offener Kupplung K2 von der Steuereinheit 32 her jeweils derart angesteuert werden, dass sie kein Moment abgibt oder nach dem Auslegen des eingelegten Ganges eine Synchronisierung auf den neuen Vorwählgang unterstützt. Diese Synchronisierung kann auch vollständig von der Elektromaschine übernommen werden, so dass auf dieser Getriebeeingangswelle die Synchronisiereinrichtungen entfallen können. Im Volllast-Boost-Betrieb, d.h. bei voller Beschleunigung des Fahrzeuges mit Unterstützung des Antriebsmoments des Antriebsmotors 14 durch die Elektromaschine 32 durch dessen Boost-Moment (siehe DE 19 945 473 A) führt dies während eines Gangwechsels zu einem für die Insassen unkomfortablen Beschleunigungseinbruch des Fahrzeuges.

Der Erfindung liegt die Aufgabe zugrunde, eine Möglichkeit zu schaffen, einen Beschleunigungseinbruch beim Hochschalten eines Parallelschaltgetriebes unter Boost-Betrieb zu vermeiden.

Eine Losung dieser Aufgabe wird mit einem verranren zum Hochschalten eines Parallelschaltgetriebes mit zwei Eingangswellen, die über je eine Kupplung mit der Antriebswelle eines Antriebsmotors kuppelbar sind, und einer Ausgangswelle, die über unterschiedliche Gangradsätze in drehfesten Eingriff mit den Eingangswellen bringbar ist, und wenigstens einer, mit einer der Eingangswellen drehfest verbundenen Elektromaschine zur Abgabe eines das Antriebsmoment des Antriebsmotors unterstützenden Boostmoments erzielt, bei welchem Verfahren das von der Elektromaschine erzeugte Boostmoment während der Phase, während der die Drehzahl des Antriebsmotors beim Schalten von einem alten Gang in einen neuen, höheren Gang absinkt, zumindest annähernd durch das infolge der Drehzahlabsenkung von dem Antriebsmotor erzeugte Moment ersetzt wird.

Eine vorteilhafte Durchführungsform des erfindungsgemäßen Verfahrens enthält folgende Schritte:
a) Absenken des von der dem alten Gang zugeordneten Kupplung übertragenen Moments von einem Ausgangswert auf etwa Null,
b) im Wesentlichen gleichzeitiges Erhöhen des von der dem neuen nächsthöheren Gang zugeordneten Kupplung übertragenen Moments von etwa Null auf etwa den Ausgangswert,
c) Aufrechterhalten des vor Beginn des Schrittes a) von der Elektromaschine abgegebenen Boostmoments während der Schritte a) und b),
d) Erhöhen des von der dem neuen, nächsthöheren Gang zugeordneten Kupplung übertragenen Moments über den Ausgangswert hinaus,
e) im Wesentlichen gleichzeitiges Absenken des Boostmoments auf etwa Null,
f) Absenken des von der dem neuen, nächsthöheren Gang zugeordneten Kupplung übertragenen Moments auf etwa den Ausgangswert und
g) im Wesentlichen gleichzeitiges Erhöhen des Boostmoments auf etwa dessen anfänglichen Wert.

Vorteilhaft wird zwischen den Schritten e) und f) zwischen der dem alten Gang zugeordneten Eingangswelle und der Ausgangswelle der übernächsthöhere Gang eingelegt.

Weiter ist es vorteilhaft, wenn nach Abschluss der Schritte f) und g) die Drehzahl des Antriebsmotors von der dem alten Gang entsprechenden Drehzahl auf die demnächst höheren Gang entsprechende Drehzahl gefallen ist.

Bei einer vorteilhaften Durchführungsform des Verfahrens wird die Kupplung im Schritt d) schlupfend betrieben. Vorteilhaft ist, wenn die Kupplung im Schritt d) und die Elektromaschine im Schritt e) derart betrieben werden, dass die Summe aus dem infolge der Absenkung der Drehzahl des Antriebsmotors erzeugten Antriebsmoments und aus dem jeweiligen Boostmoment der Elektromaschine etwa konstant ist.

Die Erfindung wird im Folgenden beispielhaft anhand schematischer Zeichnungen erläutert, in denen darstellen:
- Fig. 1: ein Ablaufdiagramm einer Hochschaltung mit dem zeitlichen Verlauf verschiedener Drehmomente;
- Fig. 2: den Verlauf verschiedener Drehzahlen während der Zeit; und
- Fig. 3: den bereits geschilderten, an sich bekannten Aufbau eines Parallelschaltgetriebes mit Elektromaschine und Steuereinrichtung.

Im Folgenden wird die Erfindung anhand einer Zughochschaltung vom zweiten in den dritten Gang mit gleichzeitigem Boostmoment bei Verwendung der Anordnung gemäß Fig. 3 erläutert.

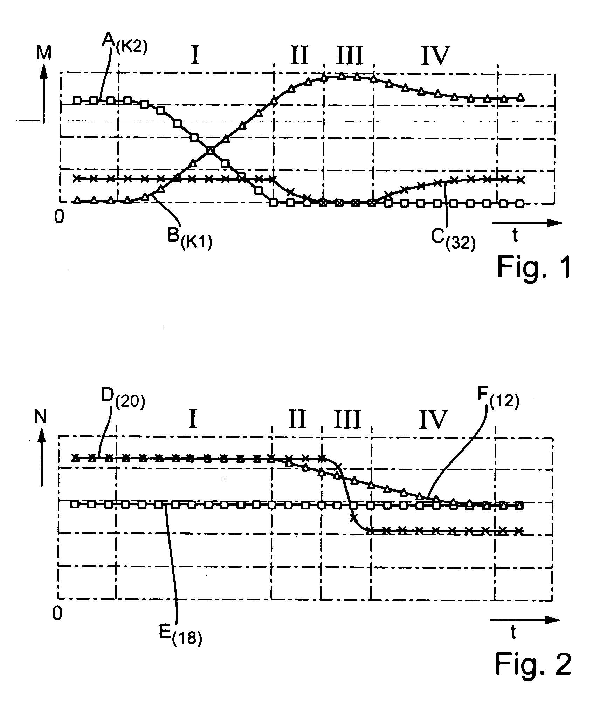

In den Fig. 1 und 2 gibt jeweils die Abszisse den Zeitverlauf an, wobei das dargestellte Zeitfenster beispielsweise kürzer als einem halbe Sekunde ist. Auf der Ordinate der Fig. 1 ist das Drehmoment angegeben, wobei der dargestellte Bereich beispielsweise von 0 bis 200 Nm reicht. In Fig. 2 gibt die Ordinate Drehzahlen an, wobei der dargestellte Bereich beispielsweise von 0 bis 5000 min⁻¹ reicht. Mit I, II, III und IV sind verschiedene Phasen einer Schaltung dargestellt, in denen unterschiedliche Verfahrensschritte ablaufen.

Es sei zunächst angenommen, das Fahrzeug wird im dritten Gang mit unter Volllast laufenden Antriebsmotor 14 und zusätzlichem Boostmoment der Elektromaschine 32 beschleunigt. Die Kupplung K2 (Fig. 3) ist dann geschlossen und überträgt gemäß der durch Vierecke dargestellten Kurve A (Fig. 1) linksseitig der Phase I ein einem Ausgangswert entsprechendes Moment, das so groß ist, dass die Kupplung K2 zumindest im Wesentlichen schlupffrei betrieben wird. Die Kupplung K1 überträgt gemäß der mit Dreiecken dargestellten Kurve B ein Moment von etwa 0, d.h. ist geöffnet. Die Elektromaschine 32 wird gemäß der Kurve C mit einem Boostmoment betrieben, das zusätzlich zum Antriebsmoment des Antriebsmotors 14 das Fahrzeug antreibt und beschleunigt. In der Phase I, in der ein Schaltvorgang beginnt, erfolgt durch Absenken des Moments der Kupplung K2 auf etwa Null und im Wesentlichen gleichzeitigem Erhöhen des von der Kupplung K1 übertragenen Moments (Kurve B) auf etwa den Ausgangswert ein Umschalten der Drehmomentübertragung von der Antriebswelle 20 auf die Eingangswelle 18 und von dort über das mit Hilfe des Kopplungsgliedes 24 drehfest mit der Eingangswelle 18 gekoppelte Gangrand des dritten Gangs auf die Ausgangswelle 22. Das Boostmoment der Elektromaschine wird in Phase I im Wesentlichen unverändert beibehalten (Kurve C).

In einer anschließenden Phase II wird das von der Kupplung K1 übertragbare Drehmoment gemäß der Kurve B über den Ausgangswert hinaus erhöht, wobei sich die Kupplung K1 vorteilhafterweise noch in der Schlupfphase befindet. Durch diese Überhöhung ist die Kupplung K1 in der Lage, ein zusätzliches von dem Antriebsmotor 14 infolge dessen Abbremsung auf die dem neuen Gang entsprechende Drehzahl erzeugte Antriebsmoment zu übertragen, so dass das Boostmoment der Elektromaschine 32 in der Phase II auf annähernd Null verringert werden kann, ohne dass ein Beschleunigungseinbruch erfolgt.

Während der anschließenden Phase III, während der der Antriebsmotor 14 infolge des Schaltens in den dritten Gang weiter abgebremst wird und infolgedessen das fehlende Boostmoment ausgleicht, bringt die E-Maschine kein Drehmoment ein oder unterstützt die Synchronisation des nächsten Vorwahlgangs beziehungsweise führt diese bei Fehlen einer Synchronisationseinrichtung aus, so dass das Gangrad des vierten Gangs mittels des Kopplungsgliedes 28 eingerückt werden kann, wobei die Antriebswelle 20 auf eine dem vierten Gang entsprechende niedrigere Drehzahl abgebremst wird.

Nach Beendigung der Phase III wird in Phase IV das von der Kupplung K1 übertragbare Moment auf etwa den Ausgangswert, der dem von dem Antriebsmotor 14 bei konstanter Drehzahl unter Volllast erzeugten Moments entspricht, abgesenkt und die Elektromaschine 32 wird wiederum derart angesteuert, dass sie das Boostmoment erzeugt, so dass nach dem Ende der Phase IV das Fahrzeug im dritten Gang bei nunmehr eingelegten bzw. vorgewählten vierten Gang unter zusätzlichem Boostmoment der Elektromaschine 54 bei zumindest weitgehend schlupffreier Kupplung K1 weiter beschleunigt.

Fig. 2 zeigt, wie die Drehzahl des Antriebsmotors 14 gemäß der Kurve F vom Ende der Phase I bis etwa zur Mitte der Phase IV kontinuierlich entsprechend der Schaltung vom zweiten in den dritten Gang abnimmt, die Drehzahl der "alten" Eingangswelle 20 gemäß der Kurve D in der Phase III durch die Synchronisation bzw. Einlegen des vierten Gangs mittels des Kopplungsgliedes 28 von einer dem zweiten Gang entsprechenden Übersetzung auf eine dem vierten Gang entsprechende Übersetzung abnimmt und die Drehzahl der Eingangswelle 18 (und auch der Ausgangswelle 22) im Wesentlichen konstant ist.

Insgesamt wird mit dem beschriebenen Verfahren eine Volllastzughochschaltung mit Boostunterstützung erreicht, bei der kein Beschleunigungseinbruch erfolgt und an deren Ende der übernächsthöhere Gang für eine zügige Weiterschaltung bereits vorgewählt ist.

Das beschriebene Verfahren gilt im dargestellten Beispiel für Zughochschaltungen auf ungerade Gänge. Für Zughochschaltungen auf gerade Gänge ist das vorstehend geschilderte Verfahren nur dann notwendigen, wenn beide Eingangswellen 20 und 18 mit je einer Elektromaschine gekoppelt sind.

Es versteht sich, dass das beschriebene Verfahren auch an in ihrem detaillierten Aufbau von dem geschilderten Parallelschaltgetriebe unterschiedlichen Parallelschaltgetrieben anwendbar ist, solange der Aufbau des Parallelschaltgetriebes und die Anbindung der Elektromaschine bzw. der Elektromaschinen es ermöglich, das Boostmoment der Elektromaschine während der Phase, während der die Drehzahl des Antriebsmotors bei der Überschneidungsschaltung von einem alten Gang in einen neuen, höheren Gang durch gleichzeitige gegensinnige Betätigung der Kupplungen absinkt, zumindest annähernd durch das infolge der Drehzahlabsenkung von dem Antriebsmotor erzeugte Moment zu ersetzen und dadurch einen Beschleunigungseinbruch zu vermeiden. Dadurch, dass während der Drehzahlabsenkung des Antriebsmotors das Boostmoment der Elektromaschine auf zumindest annähernd Null zugefahren werden kann, kann eine Synchronisierung eines neuen Gangs bzw. dessen Einlegen erfolgen.

## Patentansprüche

1. Verfahren zum Hochschalten eines Parallelschaltgetriebes mit zwei Eingangswellen (18, 20), die über je eine Kupplung (K1, K2) mit der Antriebswelle (12) eines Antriebsmotors kuppelbar sind, und einer Ausgangswelle (22), die über unterschiedliche Gangradsätze in drehfesten Eingriff mit den Eingangswellen bringbar ist, und wenigstens einer, mit einer der Eingangswellen drehfest verbindbaren Elektromaschine (32) zur Abgabe eines das Antriebsmoment des Antriebsmotors unterstützenden Boostmoments,
bei welchem Verfahren das von der Elektromaschine (32) erzeugte Boostmoment während der Phase, während der die Drehzahl des Antriebsmotors (14) beim Schalten von einem alten Gang in einen neuen, höheren Gang absinkt, zumindest annähernd durch das infolge der Drebzahtabsenkung von dem Antriebsmotor erzeugte Moment ersetzt wird.

2. Verfahren nach Anspruch 1, enthaltend folgende Schritte:
a) Absenken des von der dem alten Gang zugeordneten Kupplung übertragenen Moments von einem Ausgangswert auf etwa Null,
b) im Wesentlichen gleichzeitiges Erhöhen des von der dem neuen nächsthöheren Gang zugeordneten Kupplung übertragenen Moments von etwa Null auf etwa den Ausgangswert,
c) Aufrechterhalten des vor Beginn des Schrittes a) von der Elektromaschine abgegebenen Boostmoments während der Schritte a) und b),
d) Erhöhen des von der dem neuen, nächsthöheren Gang zugeordneten Kupplung übertragenen Moments über den Ausgangswert hinaus,
e) im Wesentlichen gleichzeitiges Absenken des Boostmoments auf etwa Null,
f) Absenken des von der dem neuen, nächsthöheren Gang zugeordneten Kupplung übertragenen Moments auf etwa den Ausgangswert und
g) im Wesentlichen gleichzeitiges Erhöhen des Boostmoments auf etwa dessen anfänglichen Wert.

3. Verfahren nach Anspruch 2, wobei zwischen den Schritten e) und f) zwischen der dem alten Gang zugeordneten Eingangswelle und der Ausgangswelle der übernächsthöhere Gang eingelegt wird.

4. Verfahren nach Anspruch 3, wobei die Schritte f) und g) nach Einlegen des übernächsthöheren Gangs beginnen.

5. Verfahren nach einem der Ansprüche 2 bis 4, wobei die Kupplung im Schritt d) schlupfend betrieben wird.

6. Verfahren nach Anspruch 5, wobei die Kupplung im Schritt d) und die Elektromaschine im Schritt e) derart betrieben werden, dass die Summe aus dem infolge der Absenkung der Drehzahl des Antriebsmotors erzeugten Antriebsmoments und aus dem jeweiligen Boostmoment der Elektromaschine etwa konstant ist.

7. Verfahren nach einem der Ansprüche 1 bis 6, **dadurch gekennzeichnet, dass** zur Synchronisation einer Getriebeeingangsdrehzahl auf die Getriebeausgangsdrehzahl während einer Schaltung eines Gangs Synchronisationseinrichtungen vorgesehen sind, die während des Synchronisationsvorganges von der Elektromaschine unterstützt werden, indem die Elektromaschine ein Drehmoment aufbringt, das das Angleichen der beiden Drehzahlen erleichtert.

8. Verfahren nach einem der Ansprüche 1 bis 6, **dadurch gekennzeichnet, dass** zur Synchronisation einer Getriebeeingangsdrehzahl auf die Getriebeausgangsdrehzahl während einer Schaltung eines Gangs die Elektromaschine ein Drehmoment zum Angleichen der beiden Drehzahlen aufbringt.

## Claims

1. A method for up-shifting a parallel manual transmission, having two input shafts (18, 20), each of which may be coupled via a clutch (K1, K2) to the driveshaft (12) of a drive engine, and an output shaft (22) which may be brought into rotationally fixed engagement with the input shafts through different sets of gear wheels, and at least one electric motor (32) which may be connected to one of the input shafts in a rotationally fixed connection to deliver a boost torque in support of the drive torque of the drive engine,
in which method the boost torque produced by the electric motor (32) is at least approximately replaced by the torque produced by the drive engine as a result of the decrease in rotational speed during the phase in which the rotational speed of the drive engine (14) drops during shifting from an old gear into a new, higher gear.

2. A method according to Claim 1, containing the following steps:
a) lowering of the torque transmitted by the clutch assigned to the old gear from an initial value to around zero,
b) essentially simultaneous increasing of the torque transmitted by the clutch assigned to the next-higher gear from around zero to approximately the initial value,
c) maintenance of the boost torque delivered by the electric motor before the beginning of step a), during steps a) and b),
d) increasing of the torque transmitted by the clutch assigned to the new, next-higher gear, above the initial value,
e) essentially simultaneous lowering of the boost torque to around zero,
f) lowering of the torque transmitted by the clutch assigned to the new, next-higher gear, to around the initial value, and
g) essentially simultaneous increasing of the boost torque to approximately its initial value.

3. The method according to Claim 2, wherein between steps e) and f) the second-higher gear is engaged between the input shaft assigned to the old gear and the output shaft.

4. The method according to Claim 3, wherein steps f) and g) begin after the second-higher gear is engaged.

5. The method according to one of Claims 2 through 4, wherein the clutch in step d is operated with slippage.

6. The method according to Claim 5, wherein the clutch in step d) and the electric motor in step e) are operated in such a way that the sum of the drive torque generated as a result of lowering the speed of the drive engine and the particular boost torque of the electric motor is approximately constant.

7. The method according to one of Claims 1 through 6, **characterized in that** to synchronize a transmission input speed to the transmission output speed during a shifting of a gear, synchronization devices are provided which are supported during the synchronization process by the electric motor, **in that** the electric motor applies a torque which simplifies the matching of the two speeds.

8. The method according to one of Claims 1 through 6, **characterized in that** to synchronize a transmission input speed to the transmission output speed during a shifting of a gear, the electric motor applies a torque to match the two speeds.

## Revendications

1. Procédé pour le passage à un rapport de vitesse supérieur dans une boîte de vitesses parallèle comprenant deux arbres d'entrée (18, 20), qui peuvent être couplés chacun par l'intermédiaire d'un embrayage respectif (K1, K2) à l'arbre d'entraînement (12) d'un moteur d'entraînement, et comprenant également un arbre de sortie (22), qui peut être amené en prise de transmission de rotation avec les arbres d'entrée par l'intermédiaire de différents jeux de roues dentées de rapport de vitesse, l'ensemble comprenant également au moins une machine électrique (32) destinée à fournir un couple additionnel amplificateur d'assistance au couple d'entraînement du moteur d'entraînement, procédé selon lequel, pendant la phase au cours de laquelle la vitesse de rotation du moteur d'entraînement (14) chute lors du passage d'un rapport de vitesse antérieur à un nouveau rapport de vitesse supérieur, le couple additionnel amplificateur engendré par la machine électrique (32) est remplacé au moins approximativement par le couple engendré par le moteur d'entraînement suite à la chute de la vitesse de rotation.

2. Procédé selon la revendication 1, présentant les étapes suivantes :
a) abaissement du couple transmis par l'embrayage associé au rapport de vitesse antérieur, d'une valeur initiale à environ zéro,
b) augmentation sensiblement simultanée du couple transmis par l'embrayage associé au rapport de vitesse supérieur le plus proche, d'environ zéro à environ la valeur initiale,
c) conservation pendant les étapes a) et b), du couple additionnel amplificateur délivré par la machine électrique avant le début de l'étape a),
d) augmentation du couple transmis par l'embrayage associé au nouveau rapport de vitesse supérieur le plus proche, au-delà de la valeur initiale,
e) abaissement sensiblement simultané du couple additionnel amplificateur à environ zéro,
f) abaissement du couple transmis par l'embrayage associé au nouveau rapport de vitesse supérieur le plus proche, à environ la valeur initiale, et
g) augmentation sensiblement simultanée du couple additionnel amplificateur environ à sa valeur de début.

3. Procédé selon la revendication 2, d'après lequel entre les étapes e) et f), on enclenche, entre l'arbre d'entrée associé au rapport de vitesse antérieur et l'arbre de sortie, le deuxième rapport de vitesse supérieur suivant.

4. Procédé selon la revendication 3, d'après lequel les étapes f) et g) débutent après l'enclenchement dudit deuxième rapport de vitesse supérieur suivant.

5. Procédé selon l'une des revendications 2 à 4, d'après lequel dans l'étape d) on fait fonctionner l'embrayage en mode glissant.

6. Procédé selon la revendication 5, d'après lequel on fait fonctionner l'embrayage dans l'étape d) et la machine électrique dans l'étape e) de façon telle que la somme du couple d'entraînement engendré suite à l'abaissement de la vitesse de rotation du moteur d'entraînement, et du couple additionnel amplificateur respectif de la machine électrique, soit sensiblement constante.

7. Procédé selon l'une des revendications 1 à 6, **caractérisé en ce que** pour la synchronisation d'une vitesse de rotation d'entrée de boîte de vitesses avec la vitesse de rotation de sortie de boîte de vitesses pendant le passage d'un rapport de vitesse, sont prévus des dispositifs de synchronisation, qui, pendant la phase de synchronisation, sont assistés par la machine électrique, grâce au fait que la machine électrique fournit un couple qui facilite l'égalisation des deux vitesses de rotation.

8. Procédé selon l'une des revendications 1 à 6, **caractérisé en ce que** pour la synchronisation d'une vitesse de rotation d'entrée de boîte de vitesses avec la vitesse de rotation de sortie de boîte de vitesses pendant le passage d'un rapport de vitesse, la machine électrique fournit un couple destiné à égaliser les deux vitesses de rotation.
